# EUROPEAN PATENT SPECIFICATION

(11) **EP 2 369 167 B1**
(45) Date of publication and mention of the grant of the patent: **05.06.2013**
(21) Application number: 11004511.9
(22) Date of filing: 04.11.2004
(51) Int. Cl.: F02M 69/00, F02M 69/04, F02M 35/10, F02M 35/16, F02M 61/14, F02M 69/46

(54) **Fuel supply device and vehicle with the same**
Kraftstoffzuführvorrichtung und Fahrzeug damit
Dispositif d'alimentation en carburant et véhicule l'utilisant

(30) Priority: 07.11.2003 JP 2003378583; 16.04.2004 JP 2004121609
(43) Date of publication of application: 28.09.2011
(62) Divisional of application: 04799487.6
(73) Proprietor: Yamaha Hatsudoki Kabushiki Kaisha, Iwata-shi, Shizuoka 438-8501 (JP)
(72) Inventor: Konakawa, Tsugunori, Iwata-shi Shizuoka-ken 438-8501 (JP)
(74) Representative: Grünecker, Kinkeldey, Stockmair & Schwanhäusser

(56) References cited:
- JP-A- 58 035 266
- JP-A- 2000 097 131
- US-A- 5 261 375
- US-A- 5 826 553

## Description

The present invention relates to a fuel supply device **according to the preamble of independent claim 1. Such a fuel supply device can be taken from the prior art document** JP 2000-097131 A**.**

As a fuel supply device that supplies a fuel to an engine, there is one, in which fuel injectors are arranged on downstream and upstream sides of a throttle valve in an intake passage. Also, there is an arrangement construction of such fuel supply device, in which the fuel injector on the downstream side is arranged outside the intake passage and the fuel injector on the upstream side is arranged upstream of an intake port of the intake passage and substantially in parallel to an axis of the intake passage (see, for example, Patent Document 1).
Patent Document 1: JP-A-10-196494

With the conventional fuel supply devices, an air flow directed toward the intake port of the intake passage is formed upstream of the intake port. The fuel injector on the upstream side is arranged in the air flow. Therefore, there is caused a problem that the fuel injector causes an increase in air resistance to constitute a factor to obstruct an increase in engine output.

Further, in conventional fuel supply devices, it must be taken into consideration that turbulence in air flow causes a fuel, which is jetted from the upstream-side fuel injector, to scatter (referred below to as "blowing and spilling") outside the intake passage. Here, as a way to prevent blowing and spilling, it is conceivable to restrict a quantity of a fuel jetted from the upstream-side fuel injector.

However, when the quantity of a fuel jetted from the upstream-side fuel injector is restricted, there is a fear that a fuel quantity supplied to an engine is short. Therefore, there is caused a problem that it is not possible to cope with a state at the time of high rotation/high load of the engine.

It is an object of the present invention to provide a fuel supply device capable of supplying a sufficient fuel even at the time of high rotation/high load of an engine to achieve enhancing an engine output.
According to the present invention said object is solved by a fuel supply device for an engine having the features of independent claim 1. Preferred embodiments are laid down in the dependent claims.

A fuel supply device comprises an intake chamber having an introducing portion for introduction of an air, an intake passage having an opening opened to the intake chamber and guiding an air in the intake chamber from the opening to an engine, and an injector to inject a fuel between the introducing portion in the intake chamber and the opening, and the intake chamber comprises a wall surface, which intersects an imaginary surface including an opened surface of the opening and is inclined in a manner to approach a perpendicular to the imaginary surface as it comes toward the opening, and by which an air introduced into the intake chamber is led to the opening.

A further fuel supply device comprises an intake chamber having an introducing portion for introduction of an air, an intake passage having an opening opened to the intake chamber and guiding an air in the intake chamber from the opening to an engine, and an injector to inject a fuel between the introducing portion in the intake chamber and the opening, and the intake chamber comprises a wall surface, which is intersects an imaginary surface including an opened surface of the opening and is inclined in a manner to approach a perpendicular to the imaginary surface as it comes toward the opening, and of which a portion intersecting the imaginary surface is positioned at a distance from an opening center of the opening equal to or less than twice a diameter of the opening.

A further fuel supply device comprises an intake chamber having an introducing portion for introduction of an air, an intake passage having an opening opened to the intake chamber and guiding an air in the intake chamber from the opening to an engine, and an injector arranged in the intake chamber to inject a fuel toward the opening, and wherein the intake chamber comprises a wall surface, which is provided downstream of the inclined wall surface to intersect an imaginary surface including an opened surface of the opening and inclined in a manner to approach a perpendicular to the imaginary surface as it comes toward the opening, and by which an air flowing from the inclined wall surface is led to the opening.

A further fuel supply device comprises an intake chamber having an introducing portion for introduction of an air, an intake passage having an opening opened to the intake chamber and guiding an air in the intake chamber from the opening to an engine, and an injector arranged in the intake chamber to inject a fuel toward the opening, and the intake chamber comprises an inclined wall surface, which is provided laterally of the injector to intersect the injector as viewed in a side view, and by which an air flow flowing toward the injector from a direction intersecting a jetting direction of the injector is directionally changed to the jetting direction, and a wall surface, which is provided downstream of the inclined wall surface to intersect an imaginary surface including an opened surface of the opening and inclined in a manner to approach a perpendicular to the imaginary surface as it comes toward the opening, and which leads an air flowed from the inclined wall surface to the opening.

A further fuel supply device comprises an intake chamber having an introducing portion for introduction of an air, an intake passage having an opening opened to the intake chamber and guiding an air in the intake chamber from the opening to an engine, and an injector arranged in the intake chamber to inject a fuel toward the opening, and the intake chamber comprises an inclined wall surface, which is provided laterally of the injector to intersect the injector as viewed in a side view, and by which an air flow flowing toward the injector from a direction intersecting a jetting direction of the injector is directionally changed to the jetting direction, and a wall surface, which is provided downstream of the inclined wall surface to intersect an imaginary surface including an opened surface of the opening and inclined in a manner to approach a perpendicular to the imaginary surface as it comes toward the opening, and of which a portion intersecting the imaginary surface is positioned at a distance from an opening center of the opening equal to or less than twice a diameter of the opening.

With the fuel supply device, a fuel is atomized making use of a space in the intake chamber in order that the fuel be jetted into the intake chamber. Therefore, atomization of the fuel is expedited. Further, with the fuel supply device, an air introduced into the intake chamber from the introducing portion is guided by the wall surface to thereby form an air flow flowing into the opening. Therefore, a fuel, which is jetted from the injector, together with the air flow flows into the opening without blowing and spilling. Accordingly, it is possible to supply a sufficient fuel at the time of high rotation/high load or the like of an engine. In this manner, with the fuel supply device, an improvement in engine performance can be achieved by the additive effects of expedition of atomization of a fuel and prevention of blowing and spilling of the fuel.

### Advantage of the Invention

According to the invention, an improvement in engine performance can be achieved even at the time of high rotation/high load since atomization of a fuel jetted from a fuel injector is expedited and a sufficient quantity of the fuel is supplied.

### Brief Description of the Drawings

[Fig. 1] Fig. 1 is a side view showing a motorcycle according to an embodiment of the invention.
[Fig. 2] Fig. 2 is a cross sectional view showing a fuel supply device according to a first embodiment of the invention.
[Fig. 3] Fig. 3 is a cross sectional view take along the line III-III in Fig. 2.
[Fig. 4] Fig. 4 is a front view showing an interior of a fuel supply device according to a second embodiment of the invention.
[Fig. 5] Fig. 5 is a cross sectional view take along the line V-V in Fig. 4.
[Fig. 6] Fig. 6 is a cross sectional view take along the line VI-VI in Fig. 4.
[Fig. 7] Fig. 7 is a cross sectional view showing a fuel supply device according to a third embodiment of the invention.
[Fig. 8] Fig. 8 is a cross sectional view showing an air funnel.
[Fig. 9] Fig. 9 is a cross sectional view take along the line IX-IX in Fig. 8.
[Fig. 10] Fig. 10 is a cross sectional view showing a fuel supply device according to a fourth embodiment of the invention.
[Fig. 11] Fig. 11 is a plan view showing the fuel supply device according to the fourth embodiment.

### Description of the Reference Numerals and Signs

- 8:: air funnel
- 11:: air-cleaner case
- 11I:: rear wall (wall surface)
- 14:: upstream-side fuel injector (injector)
- 14a:: injection axis
- 14c:: injection nozzle
- 15:: support bracket
- 15a:: vertical wall (auxiliary wall surface)
- 15d:: boss
- 15h:: guide wall (inclined wall surface)
- 90:: intake passage
- M:: center line of main flow
- P:: imaginary plane

Embodiments of the invention will be described with reference to the drawings.

### (First embodiment)

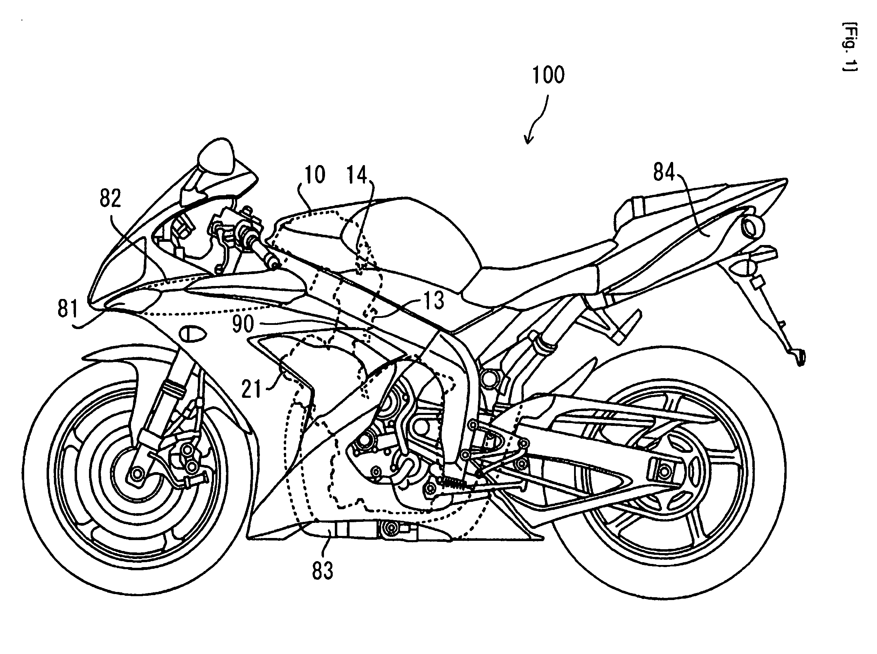

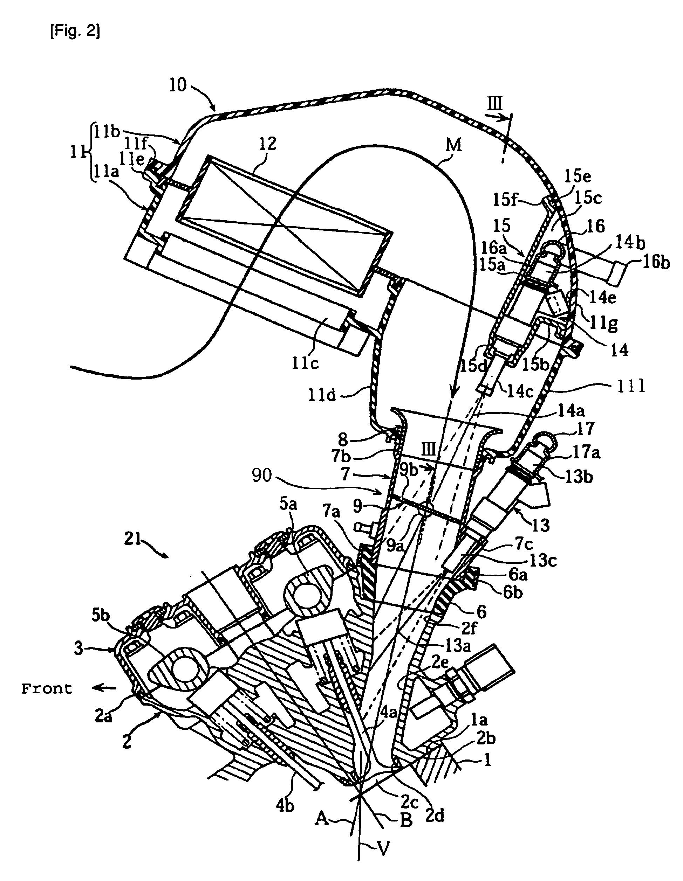

Fig. 1 is a side view showing an example of a vehicle according to an embodiment of the invention. The vehicle according to the embodiment comprises a motorcycle (including motorbike, scooter, etc.) 100. In the figure, a left side corresponds to a front side of the vehicle and a right side corresponds to a rear side of the vehicle. The motorcycle 100 comprises an inlet port 81 for introduction of an air, an air cleaner 10, an engine 21, and a muffler 84. In addition, the engine 21 in the embodiment comprises a water-cooled four-cycle parallel four-cylinder engine. The inlet port 81 and the air cleaner 10 are connected to each other through an intake duct 82. The air cleaner 10 and a combustion chamber 2c (not shown in Fig. 1. see Fig. 2) in the engine 21 are connected to each other through an intake passage 90. The combustion chamber 2c and the muffler 84 are connected to each other through an exhaust passage 83. An upstream-side fuel injector 14 is arranged inside the air cleaner 10 and a downstream-side fuel injector 13 is arranged in the intake passage 90.

In the motorcycle 100, an air sucked from the inlet port 81 is guided to the air cleaner 10 through the intake duct 82. An air purified by the air cleaner 10 and a fuel jetted from the fuel injector 14 are sucked into the intake passage 90. A fuel is further jetted into the intake passage 90 from the fuel injector 13. An air and a fuel in the intake passage 90 are fed to the combustion chamber 2c in the suction stroke of the engine 21.

The air and the fuel fed to the combustion chamber 2c are compressed in the compression stroke, burned in the combustion stroke, and forwarded into the exhaust passage 83 in the exhaust stroke. Exhaust gases forwarded into the exhaust passage 83 are exhausted outside from the muffler 84.

In the following description, an upstream in a flow direction of an air supplied to the combustion chamber 2c of the engine 21 through the air cleaner 10 and the intake passage 90 from the inlet port 81 is simply referred to as upstream and a downstream in the flow direction is simply referred to as downstream.

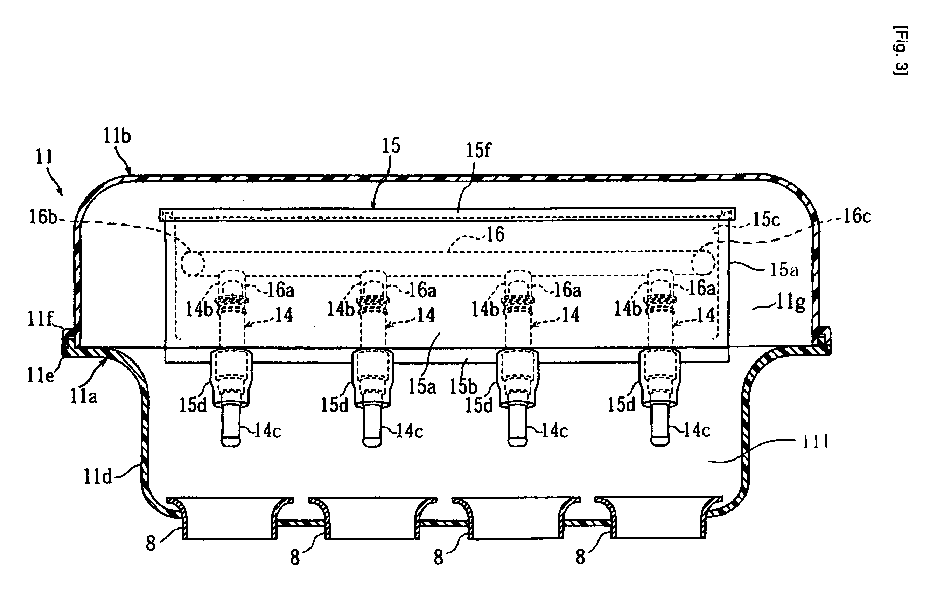

Figs. 2 and 3 are views illustrating a fuel supply device. As shown in Fig. 2, a cylinder head 2 is mounted on an upper mating surface 1a of a cylinder body 1 of the engine 21. The cylinder head 2 and the cylinder body 1 are clamped together by means of head bolts (not shown). A head cover 3 is mounted on an upper mating surface 2a of the cylinder head 2. The engine 21 is mounted in a forward tilting position or an upright position relative to a vehicle frame, and a cylinder bore axis B of the engine 21 forms an angle of 0 to 50 degrees relative to a vertical line V.

A recess to form a part of the combustion chamber 2c is formed on a lower mating surface 2b of the cylinder head 2. An intake valve opening 2d and an exhaust valve opening (not shown), which are opened to the combustion chamber 2c, are opened and closed by an intake valve 4a and an exhaust valve 4b, respectively. The intake valve 4a and the exhaust valve 4b, respectively, are drivenly opened and closed by an intake cam shaft 5a and an exhaust cam shaft 5b.

The intake valve opening 2d is formed at a downstream end of an intake port 2e, and an outside connection port 2f is formed at an upstream end of the intake port 2e. A cylindrical-shaped throttle body 7 is connected to the outside connection port 2f through a cylindrical-shaped joint member 6. Further, a connection port 7b is formed at an upstream end of the throttle body 7, and an air funnel 8 is connected to the connection port 7b. The air funnel 8, the throttle body 7, the joint member 6, and the intake port 2e define the intake passage 90 having a straight center line A. In addition, the center line A forms an angle of 20 to 50 degrees relative to the cylinder bore axis B.

The joint member 6 is cylindrical-shaped and made of heat-resisting rubber, and a lower-end flange (not shown) of the joint member 6 is bolted and fixed to a peripheral edge of the outside connection port 2f of the cylinder head 2. A downstream opening 7a of the throttle body 7 is inserted into an upper-end connection port 6a of the joint member 6, and the joint member 6 and the throttle body 7 are clamped and fixed together by a fixing band 6b.

The throttle body 7 is cylindrical-shaped and a throttle valve 9 is arranged substantially centrally in a lengthwise direction of the throttle body. The throttle valve 9 comprises a valve shaft 9a extending through the throttle body 7 in a direction (referred below to as cam shaft direction) in parallel to the cam shaft, and a valve disk 9b fixed to the valve shaft 9a. Although illustration is omitted, the valve shaft 9a is connected to a valve shaft of the adjacent throttle valve by a connection body. A throttle pulley is mounted on the connection body, and the throttle pulley is connected to a throttle grip of a steering handle through a throttle cable.

The air funnels 8 connected to upstream ends of the respective throttle bodies 7 are opened into the air cleaner 10. The air cleaner 10 comprises a box-shaped air-cleaner case 11 extending in a vehicle-width direction (cam shaft direction). An intake chamber is defined inside the air-cleaner case 11 and an element 12 is arranged in the intake chamber.

The air-cleaner case 11 is of a vertical split type to comprise a lower case 11a and an upper case 11b. Flanges 11e, 11f formed at peripheral edges of split surfaces of the lower case 11a and the upper case 11 b are fixed together by means of bolts.

The lower case 11a is compartmented into a front portion and a rear portion, the front portion is formed with a downwardly opened air inlet 11c, and the rear portion comprises a downwardly expanded outlet 11 d. The outlet 11 d mounts to a bottom surface thereof four sets of air funnels 8 every cylinder. In addition, the respective air funnels 8 are fitted into the connection ports 7b of the throttle bodies 7 of the respective cylinders when the air cleaner 10 is arranged in a predetermined position.

An element 12 is in the form of a thick plate to cover the air inlet 11c of the lower case 11a and interposed by the both flanges 11e, 11 f. The upper case 11 b is substantially arcuate-shaped as viewed in cross section. Since the upper case 11 b is arcuate-shaped in this manner, a necessary volume is ensured on a secondary side (downstream of the element 12) of the element 12.

A curved air flow passage is formed upstream of the opening of the air funnel 8. That is, the air-cleaner case 11 compartments an inverted U-shaped air flow passage extending from the air inlet 11c to the opening of the air funnel 8. A main flow of an air sucked from the air inlet 11c is changed in a flow direction to be led to the air funnels 8 such that a center line M of the flow assumes an arcuate shape as shown in Fig. 2.

The downstream-side fuel injectors 13 are arranged every cylinder on downstream sides of the throttle valves 9 of the respective throttle bodies 7, and the upstream-side fuel injectors 14 are arranged every cylinder on upstream sides.

A boss 7c is formed on a rear wall of the throttle body 7, that is, a wall positioned on an opposite side of the center line A of an intake passage to the cylinder bore axis B. The respective fuel injectors 13 are fixed in a state of being inserted into the bosses 7c. In addition, a tip end of an injection nozzle 13c of the fuel injector 13 is positioned near to an inner surface of the throttle body 7. As viewed in a cam shaft direction (in addition, the cam shaft direction is also a crankshaft direction), an injection axis 13a of the fuel injector 13 intersects an intake passage axis A in the vicinity of an inlet of an intake port 2e and is directed toward a roof wall of the intake port 2e. Fuel introduction portions 13b are provided on upper ends of the respective fuel injectors 13, the respective fuel introduction portions 13b being connected to pipes 17a branching off a fuel supply pipe 17. The fuel supply pipe 17 extends in the cam shaft direction and is common to the respective fuel injectors 13.

The respective fuel injectors 14 are supported on a rear wall 11g of the upper case 11b of the air cleaner 10 through a common support bracket 15. The support bracket 15 is formed to be substantially L-shaped in cross section to have a vertical wall 15a and a transverse wall 15b. Both left and right ends of the vertical wall 15a and the transverse wall 15b, respectively, are connected to substantially triangular-shaped end walls 15c (see Fig. 3). A substantially trigonal prism shaped separate chamber is defined between the support bracket 15 and the rear wall 11g. Flanges 15f are formed at peripheral edges of the vertical wall 15a, the transverse wall 15b, and the end walls 15c, the flanges 15f being detachably bolted and fixed to the rear wall 11g. In addition, a sealing member 15e is present between the flanges 15f and the rear wall 11 g.

The transverse wall 15b is formed with cylindrical-shaped bosses 15d, which expand downward. The respective fuel injectors 14 are fixed in a state of being inserted into the bosses 15d, and injection nozzles 14c project downward from the bosses 15d. Fuel introduction portions 14b are provided on upper ends of the respective fuel injectors 14, the fuel introduction portions 14b being inserted into and connected to pipes 16a branching off a single common fuel supply pipe 16.

As shown in Fig. 3, both ends of the fuel supply pipe 16 extend through the rear wall 11 g of the upper case 11 b to project rearward (toward a back side of a plane of Fig. 3), and joints 16b, 16c are provided on outer projecting portions of the fuel supply pipe 16 to be connected to fuel pipes on a fuel supply side and on a fuel return side. As shown in Fig. 2, electric power supply harnesses 14e, respectively, are connected to the respective fuel injectors 14. Although illustration is omitted, the four sets of electric power supply harnesses 14e in a bundled state extend through the rear wall 11g to be led outside. Provided on the led ends is a connection connector.

In this manner, the four fuel injectors 14 along with the fuel supply pipe 16 and the electric power supply harnesses 14e are mounted on the support bracket 15 to be made integral as an injector unit. The injector unit is arranged in the air cleaner 10. On the other hand, the joints 16b, 16c of the fuel supply pipe 16 and the connector connected to edges of the harnesses 14e are positioned outside the air cleaner 10 to be connected to external circuits outside the air cleaner 10.

As shown in Fig. 2, the respective fuel injectors 14 are arranged outside (an opposite side to a center of the arcuate shape) the arcuate-shaped center line M of the main air flow. As viewed in the crank shaft direction, an injection axis 14a of each fuel injector 14 intersects a center line A of the intake passage 90 at the valve shaft 9a of the throttle valve 9 and hence the center line M of the main flow. Also, the injection axis 14a is directed toward a rear surface (a surface on the right in Fig. 2) of a valve disk 9b (shown by two-dot chain lines in Fig. 2) in a fully closed position.

The vertical wall 15a of the support bracket 15 also functions as a guide plate to direct the main flow toward the air funnels 8. Since the vertical wall 15a of the support bracket 15 breaks off in the vicinity of the injection nozzles 14c of the upstream-side fuel injectors 14, however, a part of the air in some cases comes off from the main flow M to be directed rearward (rightward in Fig. 2).

However, according to the embodiment, the rear wall 11g is extended near peripheral edges of the openings from above the openings of the air funnels 8 to form a wall surface 111 in the vicinity of the openings. Therefore, the air coming off from the main flow M is guided by the wall surface 111 to flow toward the openings of the air funnels 8 to flow into the intake passage 90 from the openings.

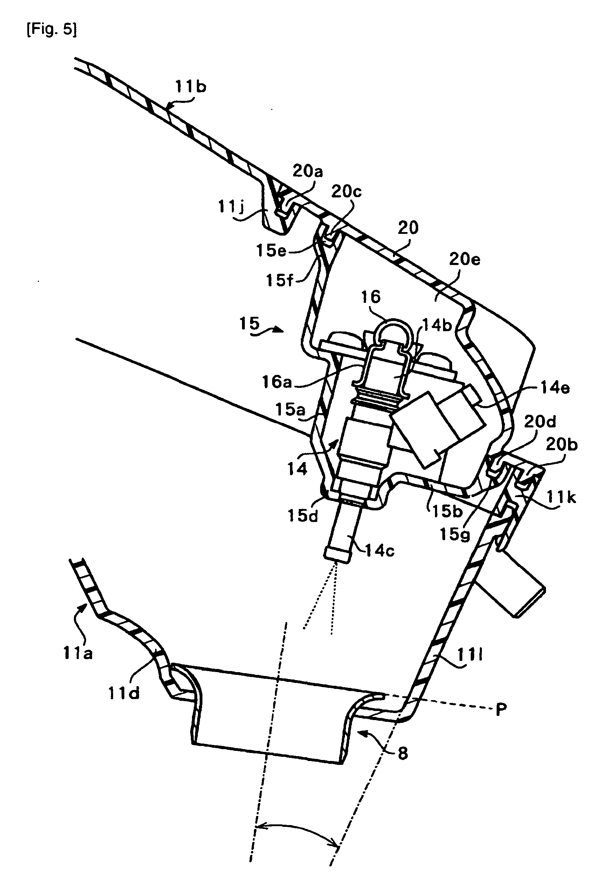

In this manner, the wall surface 11l serves to guide that air, which is introduced into the intake chamber, to the openings of the air funnels 8. The wall surface 11l intersects an imaginary surface (see the character P in Fig. 5 described later) including an opened surface of the openings and is inclined in a manner to approach a perpendicular to the imaginary surface as it comes toward the openings. That is, the wall surface is inclined in a manner to widen from the openings of the air funnels 8.

In this manner, with the fuel supply device, since the fuel injectors 14 jet a fuel from positions distant from the openings of the air funnels 8, it is possible to expedite atomization of the fuel. Also, since an air introduced into the intake chamber is led to the openings of the air funnels 8 by the wall surface 11l, it is possible to form a smooth flow entering the openings. Therefore, although the fuel is jetted from positions distant from the openings, it is possible to suppress blowing and spilling of the fuel. Accordingly, it is possible to supply a sufficient fuel to the engine 21 even at the time of high rotation/high load or the like. With the fuel supply device, an improvement in engine performance can be achieved by the additive effects of expedition of atomization of the fuel and prevention of blowing and spilling of the fuel.

Also, with the fuel supply device, since the upstream-side fuel injectors 14 are arranged outside the arcuate-shaped center line M of the main air flow, the fuel injectors 14 can be suppressed in making resistance to the air flow sucked into the intake passage 90. Accordingly, it is possible to avoid the air resistance of the fuel injectors 14 constituting a factor to obstruct an increase in engine output.

Also, as viewed in the cam shaft direction, the center line M of the main flow and the injection axis 14a of the fuel injector 14 intersect each other downstream of an upstream end opening (an upper end opening of the air funnel 8) of the intake passage 90, more specifically, at the valve shaft 9a of the throttle valve 9, so that it is possible to suppress blowing-back of the fuel.

Also, with the present fuel supply device, the fuel injectors 14, the fuel supply pipe 16, and the electric power supply harnesses 14e are mounted to the support bracket 15 to be made integral as an injector unit. Then, the injector unit is arranged in the air cleaner 10 and detachably bolted and fixed to the air-cleaner case 11. Therefore, the operation of mounting the fuel injectors 14, the fuel supply pipe 16, and the like can be made easy in spite of the plurality of fuel injectors 14 being provided. Also, since the injector unit is positioned as a whole in the air-cleaner case 11, and in particular, the fuel injectors 14 do not project outside, it is possible to avoid a problem that the fuel injectors 14 interfere with other vehicle-mounted parts to be damaged or the like.

Also, with the present fuel supply device, the both ends of the fuel supply pipe 16 are caused to project outside the air-cleaner case 11, and the joints 16b, 16c are provided on the projecting portions of the fuel supply pipe. Also, the connector connected to the edges of the harnesses 14e is arranged outside the air-cleaner case 11. Therefore, the operations of connection and disconnection of a fuel circuit and an electric circuit can be easily performed in spite of the injector unit being arranged inside the air cleaner 10.

### (Second embodiment)

According to a second embodiment of the invention, an air flow guided by a rear wall of an air cleaner 10 is positively formed and an air introduced into the air cleaner 10 is caused to more surely flow into an intake passage 90.

More specifically, according to the embodiment, a rear wall 11I of the air cleaner 10 is extended near peripheral edges of openings of air funnels 8 and an air flow is formed in the air cleaner 10 to strike against the rear wall 11l of the air cleaner 10. The rear wall 11l of the air cleaner 10 leads the air flow to the openings of the air funnels 8 whereby an air flow formed in the air cleaner 10 is surely directed toward the air funnels 8.

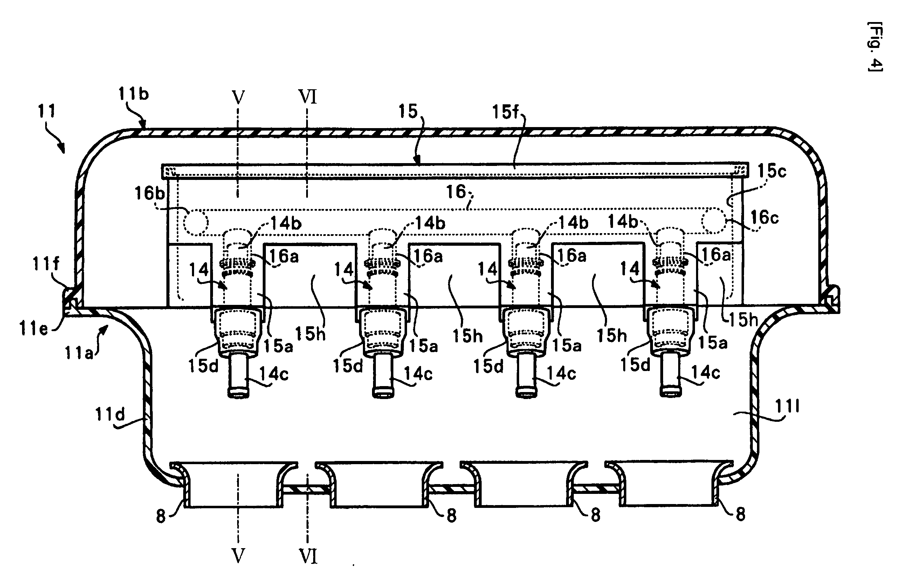

Fig. 4 is a front view showing the fuel supply device according to the embodiment. In addition, in the figure, the same or corresponding parts to those in Fig. 3 are denoted by the same reference numerals.

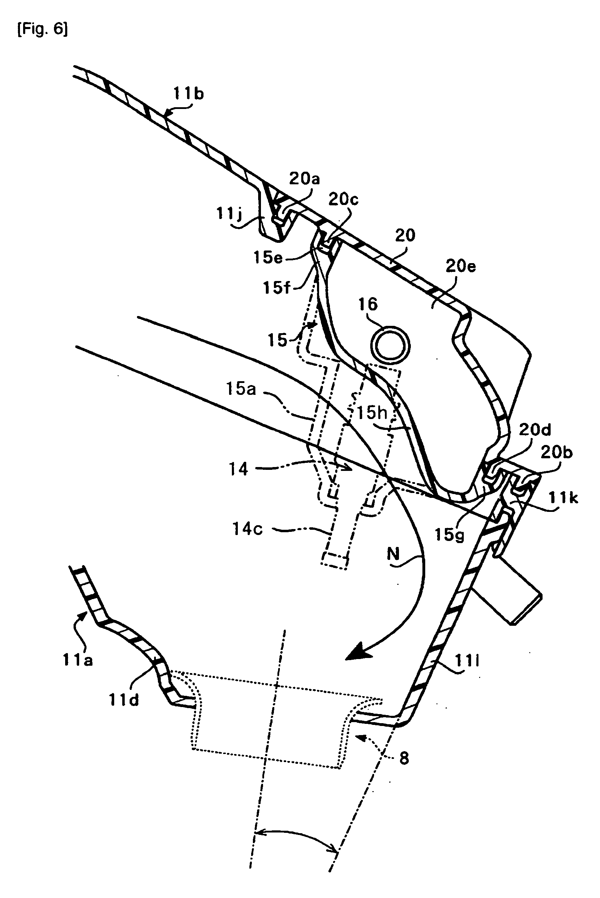

As shown in Fig. 3, the vertical wall 15a of the support bracket 15 projects wholly in the cam shaft direction. In contrast, according to the second embodiment, vertical walls 15a project only around the fuel injectors 14 as shown in Fig. 4. That is, the vertical walls 15a project in a manner to cover the fuel injectors 14. Such projecting vertical walls 15a are arranged at intervals relative to one another. Guide walls 15h are formed between the vertical walls 15a. As shown in Fig. 6, the guide walls 15h are inclined toward the rear wall 11I.

An air flow introduced from the air inlet 11c is led to the wall surface 11l by the guide walls 15h. On the other hand, the rear wall 11l is extended in opposition to the air flow. Therefore, the air flow strikes against the rear wall 11l, and then flows along the rear wall 11l. Accordingly, an air having passed between the vertical walls 15a strikes evenly against the rear wall 11l to be led to the air funnels 8 along the rear wall 11l.

Fig. 5 is a cross sectional view taken along the line V-V in Fig. 4. In addition, in the figure, the same or corresponding parts to those in Fig. 1 are denoted by the same reference numerals. In Fig. 5, a left side in a plane of the figure corresponds to a front side and a right side corresponds to a rear side.

As shown in Fig. 5, according to the second embodiment, instead of the rear wall 11 g (see Fig. 2) of the upper case 11 b, a separate chamber cover 20 is mounted to a rear portion of the upper case 11b. A substantially rectangular-shaped hole is provided in the rear portion of the upper case 11b, a grooved recess 11j is formed in a front portion of a peripheral edge of the hole, and a recess 11k is formed in a rear portion of the peripheral edge. Projections 20a, 20b of the separate chamber cover 20 are fitted into the recesses 11j, 11k through sealing members.

Further, projections 20c, 20d are provided inwardly of the projections 20a, 20b on an inner surface of the separate chamber cover 20. Recesses 15f, 15g, respectively, of the support bracket 15 are fitted onto the projections 20c, 20d through sealing members. Thereby, a separate chamber 20e in the air cleaner 10 is formed in a region surrounded by the separate chamber cover 20 and the support bracket 15. Accommodated in the separate chamber 20e is an injector unit, which is constituted by the fuel injectors 14 and the fuel supply pipe 16. With such construction, the fuel injectors 14 do not project outside the air-cleaner case 11, so that interference of the fuel injectors 14 with vehicle-mounted parts on the peripheral wall of the air cleaner 10 is prevented.

Since both joint portions of the upper case 11b and the separate chamber cover 20 and joint portions of the separate chamber cover 20 and the support bracket 15 are sealed by the sealing members, airtightness in the air cleaner 10 is kept.

The rear wall 11 constitutes an inner surface of the lower case 11a, which is formed in opposition to the air inlet 11c with the opening of the air funnel 8 therebetween. Accordingly, an air flow directed to the opening of the air funnel 8 from the air inlet 11c passes above the opening provided below the fuel injector 14 to strike against the rear wall 11l provided that any obstacle is not present on the way.

Also, the rear wall 11l is extended toward the vicinity of a peripheral edge of the opening from above the opening of the air funnel 8. That is, the rear wall 11l intersects an imaginary plane P, which includes the opening of the air funnel 8, in the vicinity of the peripheral edge of the opening. In addition, a region above the opening of the air funnel 8 indicates a region above the imaginary plane P and is not limited to a region above the width of the opening (a direction just above the opening).

In addition, that portion, in which the rear wall 11l intersects the imaginary plane P, is positioned at a distance from an opening center of the opening equal to or less than twice a diameter of the opening. From the viewpoint of making the rear wall 11l further approach the opening, a distance between the intersecting portion and the opening center is preferably at most the diameter of the opening and more preferably at most 2/3 times the diameter of the opening. However, the distance is only exemplary and not specifically limitative as far as the rear wall 11l exhibits the function of leading an air to the air funnel 8.

Further, as shown by dashed lines in the figure, the rear wall 11l is inclined outwardly of the opening relative to a center line of the air funnel 8. In addition, the center line of the air funnel 8 is perpendicular to the imaginary plane P. That is, the rear wall 11l is extended toward the center line of the air funnel 8 as it comes toward the peripheral edge of the opening from above the opening of the air funnel 8.

In this manner, since the rear wall 11l is extended toward the vicinity of a peripheral edge of the opening from above the opening of the air funnel 8, an air flow striking against the rear wall 11l flows along the rear wall 11l to flow into the opening of the air funnel 8. Also, as an inner surface of the rear wall 11l goes downward from above, it approaches the center line of the air funnel 8, so that an air flow flowing along the inner surface of the rear wall 11l from above is caused to further surely flow into the opening of the air funnel 8.

Also, according to the second embodiment, the vertical walls 15a of the support bracket 15 are provided so as to cover the fuel injectors 14 and the guide walls 15h are formed between the vertical walls 15a corresponding to the respective fuel injectors 14. Accordingly, an air in the air cleaner 10, introduced from the air inlet 11c, is guided toward the rear wall 11l of the lower case 11 a along the guide walls 15h.

Fig. 6 is a cross sectional view taken along the line VI-VI in Fig. 4. In addition, while Fig. 5 is a cross sectional view showing an area where the whole injector unit is accommodated in the separate chamber 20e, Fig. 6 is a cross sectional view showing an area where only the fuel supply pipe 16 is accommodated in the separate chamber 20e.

In this area, the support bracket 15 has the guide walls 15h. The guide walls 15h are inclined in a manner to lead an air flow in the air cleaner 10, to the rear wall 11l. According to the second embodiment, the guide walls 15h are streamlined in shape. Therefore, the guide walls 15 can lead the air flow smoothly. Also, since the support bracket 15 serves as the guide walls 15h, it is not necessary to form guide walls making use of new members.

Accordingly, the air flow in the air cleaner 10 is led to the rear wall 11l along the streamlined shape of the guide walls 15h. In other words, an air flow flowing toward the fuel injectors 14 in a direction intersecting a jetting direction of the fuel injectors 14 is directionally changed toward the jetting direction by the guide walls 15. Further, the guide walls 15 form an air flow N directed toward the vicinity of the peripheral edges of the openings of the air funnels 8 along the inner surface of the rear wall 11l. As described above, since the rear wall 111 is extended toward the vicinity of the peripheral edges of the openings of the air funnels 8, the air flow N guided by the rear wall 11l is caused to surely flow into the openings of the air funnels 8. In this manner, the smooth air flow N is formed in the air cleaner 10. That is, an air introduced from the air inlet 11c passes through the element 12, and thereafter smoothly flows into the openings of the air funnels 8 along the rear wall 11l.

On the other hand, a fuel is jetted into the air cleaner 10 from the injection nozzles 14c of the fuel injectors 14. Since the injection nozzles 14c are somewhat distant from the openings of the air funnels 8, the fuel jetted from the injection nozzles 14c is atomized making use of the space within the air cleaner 10. The atomized fuel is caused by the air flow N to flow into the openings of the air funnels 8. As described above, since the air flow N is guided into the opening of the air funnel 8 by the rear wall 11l, the atomized fuel flows into the intake passage 90 without blowing and spilling.

Thus, according to the embodiment, the air flow in the air cleaner 10 flows along the rear wall 11l. Therefore, the air flow flowing into the openings of the air funnels 8 can be surely formed and after a fuel jetted into the air cleaner 10 from the fuel injectors 14 is atomized in the air cleaner 10, it can be caused by the air flow to flow into the intake passage 90 while preventing blowing and spilling. Accordingly, an improvement in engine performance can be achieved by expediting atomization of the fuel jetted from the fuel injectors 14 and supplying a sufficient fuel at the time of high rotation/high load of the engine.

In addition, while it has been described in the embodiment that since the air funnels 8 are positioned below the air cleaner 10, the rear wall 111 is extended toward the vicinity of the peripheral edges of the openings of the air funnels 8 from above the openings, the air funnels 8 is not positionally limitative in the invention.

That is, for example, in the case where the air funnels 8 are positioned rearwardly of the air cleaner 10, the inner surface of the air cleaner 10 may be extended toward the vicinity of the peripheral edges of the openings of the air funnels 8 from ahead the openings. In other words, the air cleaner 10 comprises an inner surface intersecting an imaginary plane including the opened surfaces of the air funnels 8 in the vicinity of the peripheral edges of the openings of the air funnels 8.

Also, according to the embodiment, air flows being guided to the openings of the air funnels 8 may be formed on the rear wall 111 and the vertical walls 15a, respectively, by appropriately setting the rear wall 11l and the vertical walls 15a of the support bracket 15 in shape and size. That is, an air flow being guided to the openings of the air funnels 8 may be formed by the rear wall 11l and a further air flow being guided to the openings of the air funnels 8 may be formed by the vertical walls 15a of the support bracket 15. In other words, a first air flow guided by the vertical walls 15a of the support bracket 15 and a second air flow guided by the guide walls 15h and the rear wall 11l may be formed.

Balance in intensity between the first and second air flows can be freely set by adjustment of the vertical walls 15a and the guide walls 15h in lateral width (a width in a left and right direction in Fig. 4). Concretely, when the vertical walls 15a of the support bracket 15 is increased in width and the guide walls 15h is correspondingly decreased in width, it is possible to increase the first air flow in intensity and decrease the second air flow in intensity. Such first and second air flows are directed to the openings in opposite directions. Therefore, these air flows intersect each other to thereby correct their flow directions, so that air flows are formed to further surely flow into the openings.

When the fuel injectors 14 jet a fuel to zones interposed between the first and second air flows, the fuel is caused by an air flow, in which the first and second air flows compete with each other, to flow, so that it is sucked into the intake passage 90 from the openings of the air funnels 8 without blowing and spilling.

However, the fuel injectors 14 may not necessarily jet a fuel to zones interposed between the first and second air flows. That is, a fuel may be jetted toward, for example, the first air flow. In this case, while a flow passage of the fuel is formed by the first air flow, the flow passage of the fuel is corrected by the second air flow, so that all the fuel is consequently directed to the openings of the air funnels 8.

That is, the fuel jetted from the fuel injectors 14 is led to the first air flow, but the first air flow is corrected by the second air flow to be directed to the openings of the air funnels 8. Therefore, the fuel jetted toward the first air flow or the second air flow is surely directed to the openings of the air funnels 8.

In this manner, by adjusting the vertical walls 15a and the guide walls 15h in width to balance a plurality of air flows in intensity and adjusting an inclination of injection axes of the fuel injectors 14, the jetted fuel can be surely sucked into the air funnels 8 without scattering around.

### (Third embodiment)

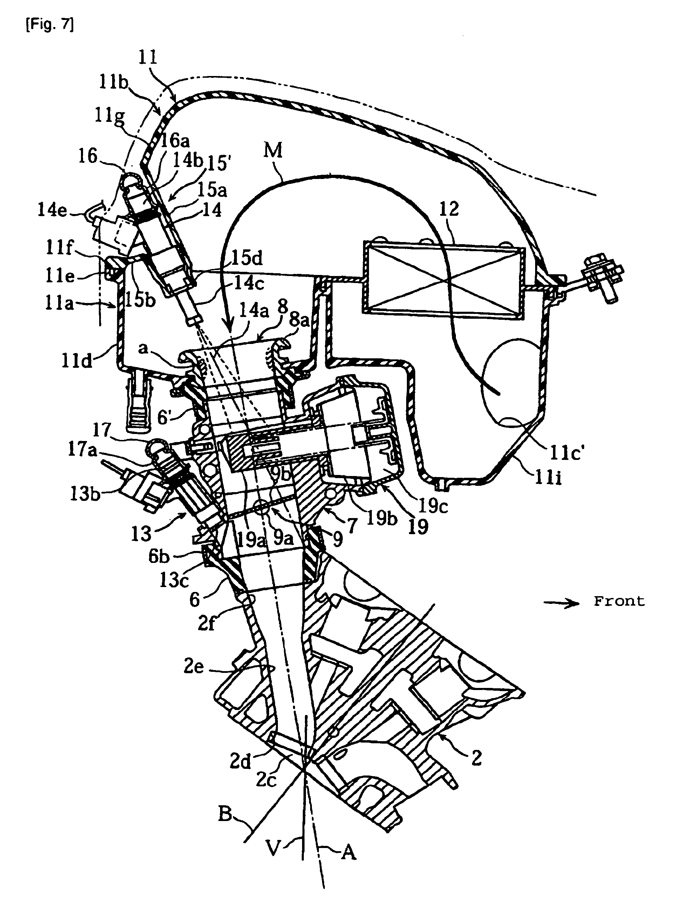

Figs. 7 to 9 are views illustrating a third embodiment of the invention, and the same or corresponding parts to those in Fig. 2 are denoted by the same reference numerals.

As shown in Fig. 7, according to the embodiment, fuel injectors 14 are arranged outside an air-cleaner case 11. A lower case 11a of an air cleaner 10 comprises a front portion (a right portion in Fig. 7), which expands downward, and an expansion portion 11 i is formed at a side wall thereof with an air inlet 11c'. Also, a rear wall 11g of an upper case 11b is formed integral with a support bracket portion 15', which corresponds to the support bracket 15 in the first embodiment and expands inwardly of the air-cleaner case 11. The fuel injectors 14 are fixed in a state of being inserted into bosses 15d of the support bracket portion 15'.

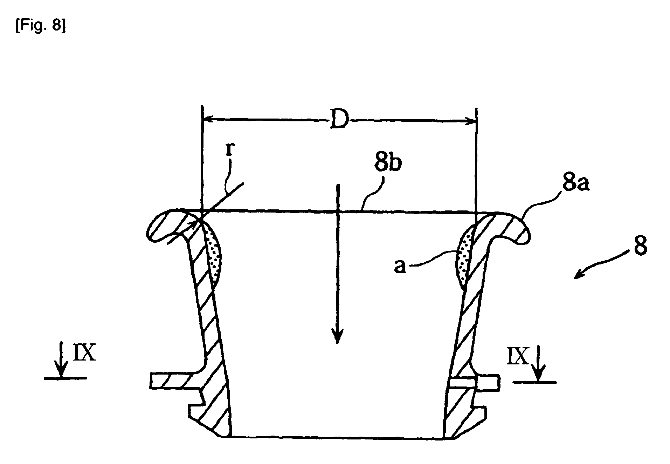

Also, according to the embodiment, air funnels 8 are connected to throttle bodies 7 through joint members 6'. The air funnels 8 are tapered in shape with suction sides thereof being slightly large in diameter, and tip ends of the air funnels 8 are formed in a bellmouth manner. The bellmouth forms a separation layer inducing portion 8a, which is provided by arcuately outwardly bending a peripheral edge of a suction port 8b (see Fig. 8). The separation layer inducing portion 8a is structured such that a separation layer a of an air flow sucked into the throttle body 7 through the air funnel 8 is positively formed on an inner surface of the air funnel 8.

Concretely, as shown in Fig. 8, the separation layer inducing portion 8a defines an arcuate curved surface, of which a radius of curvature r in an air flow direction is in the order of 0.33 to 0.01xD where D indicates a diameter of the suction port 8b of the air funnel 8. Here, when the radius of curvature r is 0.33xD, a flow coefficient assumes about 0.99. By the way, when the radius of curvature r is 0.33xD, contraction of flow is not caused by a corner of an intake inlet but when the radius of curvature r is less than 0.33xD, the flow coefficient is degraded and flow separation at the boundary layer is generated. However, when the separation layer inducing portion a is formed at the openings of the air funnels 8, a fuel having ridden pulsating waves in the intake passage 90 to counterflow in the intake passage 90 can be caught by the separation layer inducing portion a. Hereupon, according to the embodiment, blowing-back of a fuel is prevented by making effective use of boundary-layer separation at the open ends of the air funnels. Therefore, the radius of curvature r described above is adopted. That is, according to the embodiment, by providing the air funnel 8 at the upstream end of the intake passage 90, intake resistance is suppressed, and by forming the separation layer a at the open end of the air funnel 8, blowing-back of a fuel is prevented.

Further, according to the embodiment, the fuel injectors 14 are arranged in a manner to jet a fuel toward a center of the intake passage from the separation layer a.

In addition, the throttle body 7 in the embodiment comprises a diaphragm type cushion valve 19 on an upstream side of a throttle valve 9. In the cushion valve 19, a piston valve 19a to increase or decrease an area of the intake passage is biased toward a closed side. Also, the piston valve 19a is connected to a diaphragm 19b to introduce into a diaphragm chamber 19c negative pressure in the intake passage 90. Owing to the provision of such cushion valve 19, when the throttle valve 9 is abruptly opened, the piston valve 19a opens the intake passage 90 a little later to adjust an increase in air quantity to an increase in fuel injection quantity whereby it is possible to achieve a smooth increase in rotation of the engine.

According to the embodiment, since the separation layer a is positively formed at the opening of the intake passage and the fuel is jetted toward a center of the intake passage from the separation layer a, the blowing-back fuel can be prevented by the separation layer a from scattering outside, and so it is possible to suppress blowing-back of the fuel.

Also, since the fuel injectors 14 are arranged substantially outside the air-cleaner case 11, and the injection nozzles 14c project into the air-cleaner case 11, it is possible to improve the fuel injectors 14 in quality of inspection and maintenance.

### (Fourth embodiment)

Figs. 10 and 11 are views illustrating a fourth embodiment of the invention, and the same or corresponding parts to those in Figs. 2 and 7 are denoted by the same reference numerals. According to the embodiment, fuel injectors 14 are arranged inside (toward a center of an arcuate shape) a center line M of a main flow within an air-cleaner case 11.

The respective fuel injectors 14 are supported on a cylindrical-shaped support bracket 15". The support bracket 15" extends through left and right side walls of the air-cleaner case 11. The extending-through portions are interposed by flanges of a lower case 11a and an upper case 11b and sealed so as not to prevent an outside air from entering the air cleaner.

The respective fuel injectors 14 are fixed in a state of being inserted into bosses 15d of the support bracket 15", and injection nozzles 14c project downward. Also, a common fuel supply pipe 16 is connected to upper ends of the respective fuel injectors 14, an end of the fuel supply pipe 16 projects outside the air-cleaner case 11, and the projecting portion is connected to a fuel supply pump (not shown). In this manner, the four fuel injectors 14 along with the fuel supply pipe 16 and electric power supply harnesses are mounted to the support bracket 15" to be made integral to constitute an injector unit.

### Industrial Applicability

As described above, the invention is useful in fuel supply devices for engines and vehicles provided with the same.

## Claims

1. Fuel supply device for an engine comprising
an intake chamber having an introducing portion (11c) for introduction of air, an intake passage (90) having an opening to the intake chamber and guiding air in the intake chamber from said opening to the engine (21), said opening is formed in a bellmouth manner, and
an injector (14) to inject fuel between said introducing portion (11c) in the intake chamber and said opening,
wherein the intake chamber comprises a wall surface (11l), which intersects an imaginary plane (P) including the opening, wherein the wall surface (11l) is positioned in opposition to the introducing portion (11c) with the opening being arranged therebetween, **characterized in that** said wall surface (11l) being inclined relative to a perpendicular line to said imaginary plane (P), wherein said wall surface (11l) is inclined in a manner to widen from said opening.

2. Fuel supply device according to claim 1, **characterized in that** the wall surface (11l) is configured to lead air introduced into the intake chamber to the opening.

3. Fuel supply device according to claim 1 or 2, **characterized in that** the intake chamber is formed therein with a curved air flow passage, which is positioned upstream of the opening, and wherein said wall surface (11l) is positioned on a side opposed to a center of curvature of the air flow passage.

4. Fuel supply device according to one of the claims 1 to 3, **characterized in that** the intake chamber is provided with an auxiliary wall surface (15a), which is provided upstream of the wall surface (11l) to form a first air flow flowing into the opening from the introducing portion (11c), and wherein the auxiliary wall surface (15a) causes the first air flow to intersect a second air flow, which is led by the wall surface (11l) to flow into the opening, from a direction opposed to a direction of the second air flow.

5. Fuel supply device according to one of the claims 1 to 4, **characterized in that** a portion of the wall surface (11l) intersecting the imaginary plane (P) is positioned at a distance from an opening center of the opening equal to or less than twice a diameter of the opening.

6. Fuel supply device according to one of the claims 1 to 5, **characterized by** a box-shaped air-cleaner case (11), wherein the intake chamber is defined inside the air-cleaner case (11).

7. Fuel supply device according to claim 6, **characterized in that** said air-cleaner case (11) is of a vertical split type to comprise a lower case (11 a) and an upper case (11 b).

8. Fuel supply device according to claim 7, wherein flanges (11e, 11f) are formed at peripheral edges of split surfaces of the lower case (11a) and the upper case (11 b) and are fixed together by means of bolts.

9. Fuel supply device according to claim 7 or 8, **characterized in that** said wall surface (11l) constitutes an inner surface of the lower case (11 a), which is formed in opposition to the introducing portion (11 c)

10. Fuel supply device according to claim 1 to 9, **characterized in that** said wall surface (11l) is inclined outwardly of the opening relative to a center line of an air funnel (8).

11. Fuel supply device according to claim 10, **characterized in that** said center line of the air funnel (8) is perpendicular to said imaginary plane (P).

12. Fuel supply device according to claim 10 or 11, **characterized in that** said wall surface (11l) is extended toward the center line of the air funnel (8) as it comes toward a peripheral edge of the opening from above the opening of the air funnel (8).

13. Fuel supply device according to claim 12, **characterized in that** said wall surface (11l) extends toward the vicinity of the peripheral edge of said opening.

14. Vehicle provided with a fuel supply device according to one of the claims 1 to 13.

## Patentansprüche

1. Kraftstoffzuführungsvorrichtung für eine Brennkraftmaschine (11c), aufweisend eine Einlasskammer mit einem Einleitungsabschnitt (11c) zum Einleiten von Luft, einen Einlasskanal (90) mit einer Öffnung zu der Einlasskammer und Führen von Luft in die Einlasskammer von der Öffnung in die Brennkraftmaschine (21), wobei die Öffnung in einer trichterförmigen Weise gebildet ist, und
einen Einspritzer (14), um Kraftstoff zwischen dem Einleitungsabschnitt (11c) in der Einlasskammer und der Öffnung einzuspritzen,
wobei die Einlasskammer eine Wandoberfläche (11l) aufweist, die eine gedachte Ebene (P), die die Öffnung enthält, schneidet, wobei die Wandoberfläche (11l) zu dem Einleitungsabschnitt (11c) mit der Öffnung, die dazwischen angeordnet ist, gegenüberliegend positioniert ist, **dadurch gekennzeichnet, dass** die Wandoberfläche (11l) in Bezug auf eine rechtwinklige Linie zu der gedachten Ebene (P) geneigt ist, wobei die Wandoberfläche (11l) in einer Weise geneigt ist, sich von der Öffnung zu verbreitern.

2. Kraftstoffzuführungsvorrichtung nach Anspruch 1, **dadurch gekennzeichnet, dass** die Wandoberfläche (11l) konfiguriert ist, eingeleitete Luft in die Einlasskammer zu der Öffnung zu führen.

3. Kraftstoffzuführungsvorrichtung nach Anspruch 1 oder 2, **dadurch gekennzeichnet, dass** die Einlasskammer darin mit einem gekrümmten Luftströmungskanal gebildet ist, der stromauf der Öffnung positioniert ist, und wobei die Wandoberfläche (111) auf der Seite gegenüberliegend zu einer Krümmungsmitte des Luftströmungskanals positioniert ist.

4. Kraftstoffzuführungsvorrichtung nach einem der Ansprüche 1 bis 3, **dadurch gekennzeichnet, dass** die Einlasskammer mit einer Hilfswandoberfläche (15a) versehen ist, die stromauf der Wandoberfläche (11l) angeordnet ist, um eine erste Luftströmung, die in die Öffnung von dem Einleitungsabschnitt (11 c) strömt, zu bilden, und wobei die Hilfswandoberfläche (15a) die erste Luftströmung veranlasst, eine zweite Luftströmung, die durch die Wandoberfläche (11l) geführt wird, zu schneiden, um in die Öffnung von einer Richtung, gegenüberliegend zu einer Richtung der zweiten Luftströmung, zu strömen.

5. Kraftstoffzuführungsvorrichtung nach zumindest einem der Ansprüche 1 bis 4, **dadurch gekennzeichnet, dass** ein Abschnitt der Wandoberfläche (11l), der die gedachte Ebene (P) schneidet, in einem Abstand von einer Öffnungsmitte zu der Öffnung gleich zu oder weniger als zweimal dem Durchmesser der Öffnung angeordnet ist.

6. Kraftstoffzuführungsvorrichtung nach einem der Ansprüche 1 bis 5, **gekennzeichnet durch** ein kastenförmiges Luftfiltergehäuse (11), wobei die Einlasskammer innerhalb des kastenförmigen Luftfiltergehäuses (11) gebildet ist.

7. Kraftstoffzuführungsvorrichtung nach Anspruch 6, **dadurch gekennzeichnet, dass** das kastenförmige Luftfiltergehäuse (11) von einem vertikal geteilten Typ ist, um ein unteres Gehäuse (11a) und ein oberes Gehäuse (11b) aufzuweisen.

8. Kraftstoffzuführungsvorrichtung nach Anspruch 7, wobei Flansche (11e, 11f) an Umfangskanten der geteilten Oberflächen des unteren Gehäuses (11a) und dem oberen Gehäuse (11b) gebildet und zusammen mittels Schrauben befestigt sind.

9. Kraftstoffzuführungsvorrichtung nach Anspruch 7 oder 8, **dadurch gekennzeichnet, dass** die Wandoberfläche (11l) eine innere Oberfläche des unteren Gehäuses (11a) bildet, die gegenüberliegend zu dem Einleitungsabschnitt (11c) gebildet ist.

10. Kraftstoffzuführungsvorrichtung nach Anspruch 1 bis 9, **dadurch gekennzeichnet, dass** die Wandoberfläche (11l) nach außen der Öffnung in Bezug auf eine Mittellinie eines Lufttrichters (8) geneigt ist.

11. Kraftstoffzuführungsvorrichtung nach Anspruch 10, **dadurch gekennzeichnet, dass** die Mittellinie des Lufttrichters (8) zu der gedachten Ebene (P) rechtwinklig ist.

12. Kraftstoffzuführungsvorrichtung nach Anspruch 10 oder 11, **dadurch gekennzeichnet, dass** die Wandoberfläche (11l) in Richtung zu der Mittellinie des Lufttrichters (8) erstreckt verlängert ist, wenn sie in Richtung zu einer Umfangskante der Öffnung von oberhalb der Öffnung des Lufttrichters (8) kommt.

13. Kraftstoffzuführungsvorrichtung nach Anspruch 12, **dadurch gekennzeichnet, dass** sich die Wandoberfläche (11l) in Richtungen der Nähe der Umfangskannte der Öffnung erstreckt.

14. Fahrzeug mit einer Kraftstoffzuführungsvorrichtung nach einem der Ansprüche 1 bis 13.

## Revendications

1. Dispositif d'alimentation en carburant pour un moteur, comprenant
une chambre d'admission qui présente une partie d'introduction (11c) pour l'introduction d'air,
un passage d'admission (90) qui présente une ouverture vers la chambre d'admission et qui guide l'air dans celle-ci de l'ouverture jusqu'au moteur (21), ladite ouverture ayant une forme évasée, et
un injecteur (14) pour injecter du carburant entre la partie d'introduction (11c) de la chambre d'admission et l'ouverture,
étant précisé que la chambre d'admission comprend une surface de paroi (11l) qui coupe un plan imaginaire (P) contenant l'ouverture, et que la surface de paroi (11l) est placée à l'opposé de la partie d'introduction (11c), avec l'ouverture disposée entre les deux, **caractérisé en ce que** la surface de paroi (11l) est inclinée par rapport à une ligne perpendiculaire au plan imaginaire (P), étant précisé que la surface de paroi (11l) est inclinée de manière à s'élargir à partir de ladite ouverture.

2. Dispositif d'alimentation en carburant selon la revendication 1, **caractérisé en ce que** la surface de paroi (11l) est conçue pour amener vers l'ouverture l'air introduit dans la chambre d'admission.

3. Dispositif d'alimentation en carburant selon la revendication 1 ou 2, **caractérisé en ce que** la chambre d'admission est pourvue, à l'intérieur, d'un passage d'écoulement d'air courbe qui est placée en amont de l'ouverture, et étant précisé que la surface de paroi (11l) est placée sur un côté opposé au centre de la courbure du passage d'écoulement d'air.

4. Dispositif d'alimentation en carburant selon l'une des revendications 1 à 3, **caractérisé en ce que** la chambre d'admission est pourvue d'une surface de paroi auxiliaire (15a) qui est disposée en amont de la surface de paroi (11l) pour former un premier écoulement d'air qui s'écoule dans l'ouverture à partir de la partie d'introduction (11c), et étant précisé que la surface de paroi auxiliaire (15a) fait que le premier écoulement d'air coupe un second écoulement d'air qui est amené par la surface de paroi (11l) à s'écouler dans l'ouverture, à partir d'une direction opposée à une direction du second écoulement d'air.

5. Dispositif d'alimentation en carburant selon l'une des revendications 1 à 4, **caractérisé en ce qu'**une partie de la surface de paroi (11l) qui coupe le plan imaginaire (P) est placée à une distance d'un centre de l'ouverture égale ou inférieure à deux fois un diamètre de l'ouverture.

6. Dispositif d'alimentation en carburant selon l'une des revendications 1 à 5, **caractérisé par** un carter de filtre à air en forme de boîtier (11), étant précisé que la chambre d'admission est définie à l'intérieur du carter de filtre à air (11).

7. Dispositif d'alimentation en carburant selon la revendication 6, **caractérisé en ce que** le carter de filtre à air (11) est d'un type à division verticale et comprend un carter inférieur (11a) et un carter supérieur (11b).

8. Dispositif d'alimentation en carburant selon la revendication 7, étant précisé que des brides (11e, 11f) sont formées sur les bords périphériques de surfaces de division du carter inférieur (11a) et du carter supérieur (11b) et sont fixées l'une à l'autre à l'aide de boulons.

9. Dispositif d'alimentation en carburant selon la revendication 7 ou 8, **caractérisé en ce que** la surface de paroi (11l) constitue une surface intérieure du boîtier inférieur (11a) qui est formée en face de la partie d'introduction (11c).

10. Dispositif d'alimentation en carburant selon les revendications 1 à 9, **caractérisé en ce que** la surface de paroi (11l) est inclinée vers l'extérieur de l'ouverture par rapport à une ligne médiane d'un canal d'air (8).

11. Dispositif d'alimentation en carburant selon la revendication 10, **caractérisé en ce que** la ligne médiane du canal d'air (8) est perpendiculaire au plan imaginaire (P).

12. Dispositif d'alimentation en carburant selon la revendication 10 ou 11, **caractérisé en ce que** la surface de paroi (11l) s'étend vers la ligne médiane du canal d'air (8) en se rapprochant d'un bord périphérique de l'ouverture à partir du dessus de l'ouverture du canal d'air (8).

13. Dispositif d'alimentation en carburant selon la revendication 12, **caractérisé en ce que** la surface de paroi (11l) s'étend vers la proximité du bord périphérique de l'ouverture.

14. Véhicule pourvu d'un dispositif d'alimentation en carburant selon l'une des revendications 1 à 13.
